# EUROPÄISCHE PATENTSCHRIFT

(11) **EP 3 296 051 B1**
(45) Veröffentlichungstag und Bekanntmachung des Hinweises auf die Patenterteilung: **02.06.2021**
(21) Anmeldenummer: 17191784.2
(22) Anmeldetag: 19.09.2017
(51) Int. Cl.: B23K 9/095, B23K 9/10, B23K 9/16, B23K 31/02

(54) **VERFAHREN ZUR STEUERUNG EINES SCHWEISSGERÄTS, SYSTEM UMFASSEND EIN SCHWEISSGERÄT SOWIE COMPUTERPROGRAMM**
METHOD OF CONTROLLING A WELDING DEVICE, SYSTEM COMPRISING A WELDING DEVICE AND COMPUTER PROGRAM
PROCÉDÉ DE COMMANDE D'UN APPAREIL DE SOUDAGE, SYSTÈME COMPRENANT UN APPAREIL DE SOUDAGE AINSI QUE PROGRAMME INFORMATIQUE

(30) Priorität: 19.09.2016 DE 102016117626
(43) Veröffentlichungstag der Anmeldung: 21.03.2018
(73) Patentinhaber: EWM AG, 56271 Mündersbach (DE)
(72) Erfinder: Szczesny, Michael, 56721 Mündersbach (DE); Bajohr, Nils, 56584 Anhausen (DE)
(74) Vertreter: Cohausz & Florack

(56) Entgegenhaltungen:
- EP-A1- 0 879 666
- JP-A- H11 192 578
- JP-A- 2001 293 570
- US-A1- 2011 248 864
- US-A1- 2014 263 227

## Beschreibung

Die Erfindung betrifft ein Verfahren zur Steuerung eines Schweißgeräts, ausgeführt auf mindestens einem Gerät, darunter mindestens ein Schweißgerät, gemäß dem Oberbegriff des Anspruchs 1 (siehe, z.B. US 2014/0263227), ein System umfassend ein Schweißgerät und einen Schweißbrenner sowie ein Computerprogramm umfassend Programmanweisungen gemäß den Oberbegriffen der Ansprüche 8 und 13.

Im Zuge gestiegener Anforderungen an geschweißte Bauteile, sind in der Vergangenheit verschiedene Anstrengungen unternommen worden, um die Zuverlässigkeit von Schweißverbindungen verbessern und Schweißvorgänge verbessern und überwachen zu können.

Beispielsweise sind Schweißgeräte mit elektronischem Speicher bekannt, in denen Schweißparameter für verschiedene typische Schweißverbindungen (z.B. Stumpf-Stoß, T-Stoß etc.) bzw. für verschiedene Materialien (z.B. Stähle, Aluminium etc.) hinterlegt sind, so dass ein Bediener des Schweißgeräts diese bei Bedarf abrufen kann.

Zur Überwachung und Qualitätssicherung von Schweißvorgängen sind zudem Schweißgeräte bekannt, die eine Identifikationseinrichtung aufweisen, an denen sich der Bediener zum Beispiel mit einer Benutzerkarte, einem RFID-Chip, einem sogenannten Kellnerschlüssel, wie z.B. einem iButton der Fa. Maxim Integrated, oder einem anderen mobilen Kennungs- bzw. Konfigurationsspeicher anmelden muss, um bestimmte Funktionen des Schweißgeräts frei zu schalten.

Beim Schweißen ergibt sich häufig die Situation, dass der Bediener Schweißvorgänge an verschiedenen Bauteilen oder auch mehrere Schweißvorgänge an einem Bauteil vorzunehmen hat, wobei die einzelnen Schweißvorgänge verschiedene Schweißparameter erfordern bzw. in einer bestimmten Reihenfolge gemäß einem sogenannten Schweißfolgeplan durchzuführen sind.

Um bei einer solch komplexen Aufgabe zuverlässig alle Schweißnähte in der richtigen Reihenfolge und mit den richtigen Schweißparametern durchzuführen, bedarf es seitens des Bedieners des Schweißgeräts einer hohen Sorgfalt und Erfahrung. Natürlich kann es bei einer solchen Aufgabe auch zu Fehlern kommen, so dass die Schweißverbindung bzw. das geschweißte Bauteil die vorgegebenen Anforderungen unter Umständen nicht erfüllt.

Aus der US 2014/0263227 sind ein System und ein Verfahren zum Erhalten oder Verwenden von Daten externer Quellen für eine Schweißsequenz bekannt. Aus der US 2011/0248864 A1 ist ein Schweißcharakteristik-Kommunikationssystem für eine Schweißmaske bekannt

Vor diesem Hintergrund liegt der vorliegenden Erfindung die Aufgabe zu Grunde, ein Verfahren zur Steuerung eines Schweißgeräts sowie ein System umfassend mindestens ein Schweißgerät zur Verfügung zu stellen, mit dem das Schweißen vereinfacht und die Fehleranfälligkeit reduziert wird.

Diese Aufgabe wird erfindungsgemäß gelöst durch ein Verfahren zur Steuerung eines Schweißgeräts gemäß Anspruch 1, ausgeführt auf mindestens einem Gerät, darunter mindestens ein Schweißgerät, bei dem ein einem bestimmten Bauteil zugeordneter Bauteil-Datensatz erhalten wird, der Schweißparameter-Sollwerte für einen an dem Bauteil durchzuführenden Schweißvorgang vorgibt, und bei dem das Schweißgerät automatisch entsprechend der vorgegebenen Schweißparameter-Sollwerte für den Schweißvorgang eingestellt wird.

Es wurde festgestellt, dass die Qualität von Schweißvorgängen dadurch verbessert und die Bedienung eines Schweißgeräts dadurch vereinfacht werden kann, wenn Sollwerte für Schweißparameter eines an einem bestimmten Bauteil durchzuführenden Schweißvorgangs durch einen Datensatz vorgegebenen werden, der diesem Bauteil zugeordnet ist. Auf diese Weise können für einen an einem Bauteil durchzuführenden Schweißvorgang die jeweils richtigen Schweißparameter-Sollwerte automatisch eingestellt werden, indem vor Beginn des Schweißvorgangs der entsprechende Bauteil-Datensatz erhalten wird und auf dessen Basis die Schweißparameter des Schweißgeräts eingestellt werden. Dadurch wird sichergestellt, dass der Schweißvorgang automatisch mit den richtigen Schweißparametern durchgeführt wird.

Auf diese Weise muss der Bediener des Schweißgeräts insbesondere nicht selbständig ermitteln, welche Sollwerte für welche Schweißparameter für einen bestimmten Schweißvorgang an einem bestimmten Bauteil auszuwählen oder einzustellen sind, beispielsweise aus einem Menü des Schweißgeräts. Stattdessen werden die Schweißparameter durch den Bauteil-Datensatz automatisch vorgegeben, so dass Fehleingaben durch den Bediener vermieden werden.

Das Verfahren wird auf mindestens einem Gerät, darunter mindestens ein Schweißgerät, ausgeführt. So kann das Verfahren beispielsweise vollständig auf einem Schweißgerät ausgeführt werden, insbesondere unter Verwendung einer hierfür eingerichteten Steuerungseinrichtung des Schweißgeräts. Ebenso kann das Verfahren auch auf mehreren Geräten ausgeführt werden, zum Beispiel wenn das Schweißgerät durch eine externe Steuerungseinrichtung gesteuert wird, die zum Beispiel über eine Schnittstelle oder ein Netzwerk mit dem Schweißgerät verbunden sein kann.

Bei dem Verfahren wird ein Bauteil-Datensatz erhalten. Unter einem Datensatz wird vorliegend insbesondere ein digitaler strukturierter Datensatz verstanden, in dem bestimmten Schweißparametern (z.B. dem Schweißstrom, der Schweißspannung etc.) bestimmte Sollwerte (z.B. 300A, 25 V etc.) zugeordnet sind.

Der Bauteil-Datensatz ist einem bestimmten Bauteil zugeordnet. Das Bauteil kann beispielsweise durch eine Bauteilnummer gekennzeichnet und der Bauteil-Datensatz dem bestimmten Bauteil durch Verweis auf die entsprechende Bauteilnummer zugeordnet sein.

Der Bauteil-Datensatz gibt einen oder mehrere Schweißparameter-Sollwerte für einen an dem Bauteil durchzuführenden Schweißvorgang vor. Unter einem Schweißparameter wird vorliegend ein Betriebsparameter für den Schweißvorgang verstanden, der über das Schweißgerät eingestellt, gesteuert und/oder geregelt werden kann. Beispiele für Schweißparameter sind der Schweißstrom, die Schweißspannung, Parameter des Schweißstromverlauf wie zum Beispiel Schweißstromflankendauern etc.

Unter einem Schweißvorgang wird vorliegend ein insbesondere durchgehender Schweißprozess mit bestimmten Schweißparameter-Sollwerten verstanden, der an dem Bauteil durchzuführen ist, beispielsweise zur Erzeugung einer Schweißnaht oder eines Schweißpunktes. Unter dem Schweißen verschiedener Schweißnähte und/oder Schweißpunkte mit ggf. verschiedenen Schweißparameter-Sollwerten werden vorliegend verschiedene Schweißvorgänge verstanden, auch wenn sie am selben Bauteil erfolgen. Werden an einem Bauteil zum Beispiel zwei Schweißnähte an verschiedenen Positionen hergestellt, so handelt es sich hierbei um zwei separate Schweißvorgänge.

Bei dem Verfahren wird das Schweißgerät automatisch entsprechend der vorgegebenen Schweißparameter-Sollwerte für den Schweißvorgang eingestellt. Unter der automatischen Einstellung wird verstanden, dass die Schweißparameter-Sollwerte automatisch eingestellt werden, ohne dass der Bediener des Schweißgeräts die Schweißparameter-Sollwerte zahlenmäßig vorgeben müsste. Auf diese Weise muss der Bediener nicht selbst die Einstellung der Schweißparameter vornehmen, wodurch eine häufige Fehlerquelle beim Schweißen eliminiert wird.

Die oben genannte Aufgabe wird erfindungsgemäß weiterhin gelöst durch ein System gemäß Anspruch 8, umfassend ein Schweißgerät und einen Schweißbrenner und aufweisend Steuermittel, die zur Durchführung und/oder Steuerung des zuvor beschriebenen Verfahrens oder einer Ausführungsform davon eingerichtet sind.

Das System umfasst ein Schweißgerät und einen Schweißbrenner.. Das System kann neben dem Schweißgerät und dem Schweißbrenner auch weitere Komponenten umfassen, beispielsweise einen über eine Kommunikationsschnittstelle mit dem Schweißgerät verbundenen Server, der zur Steuerung und/oder Überwachung des Schweißgeräts eingerichtet ist. Das Schweißgerät kann insbesondere eine LAN- oder WLAN-Schnittstelle aufweisen, über die das Schweißgerät mit einem Netzwerk bzw. einem Server verbindbar ist.

Das System weist Steuermittel auf, die zur Durchführung und/oder Steuerung des zuvor beschriebenen Verfahrens bzw. einer Ausführungsform davon eingerichtet sind. Insbesondere können ein oder mehrere Komponenten des Systems, insbesondere eine Steuereinrichtung des Schweißgeräts oder auch ein externer Server, dazu eingerichtet sein, einen Teil des Verfahrens oder das gesamte Verfahren durchzuführen bzw. dessen Durchführung zu steuern. Vorzugsweise umfasst das System, insbesondere eine Steuerungseinrichtung des Schweißgeräts, mindestens einen Prozessor und einen damit verbundenen Speicher, auf dem ein Computerprogramm mit Programmanweisungen gespeichert ist, die den mindestens einen Prozessor zur Ausführung und/oder Steuerung des zuvor beschriebenen Verfahrens veranlassen, wenn das Computerprogramm auf dem mindestens einen Prozessor läuft.

Entsprechend wird die oben genannte Aufgabe erfindungsgemäß weiterhin gelöst durch ein Computerprogramm gemäß Anspruch 13, umfassend Programmanweisungen, die mindestens einen Prozessor zur Ausführung und/oder Steuerung des zuvor beschriebenen Verfahrens veranlassen, wenn das Computerprogramm auf dem mindestens einen Prozessor läuft.

Im Folgenden werden verschiedene Ausführungsformen des Verfahrens, des Systems und des Computerprogramms beschrieben, wobei die einzelnen Ausführungsformen jeweils einzeln für das Verfahren, für das System und für das Computerprogramm gelten und zudem untereinander kombiniert werden können.

Bei einer ersten Ausführungsform wird der dem bestimmten Bauteil zugeordnete Bauteil-Datensatz dadurch erhalten, dass eine dem bestimmten Bauteil zugeordnete Bauteil-Kennung empfangen und ein der Bauteil-Kennung zugeordneter Bauteil-Datensatz abgerufen wird. Bei der Bauteil-Kennung kann es sich beispielsweise um eine Bauteilnummer handeln, die dem betreffenden Bauteil zugeordnet ist. Die Bauteil-Kennung kann beispielsweise durch eine Benutzereingabe an einer hierfür vorgesehenen Benutzereingabe-Einrichtung empfangen werden. Auf diese Weise muss der Benutzer lediglich eine zum Beispiel am Bauteil selbst vermerkte Bauteilnummer ablesen und diese in die Benutzereingabe-Einrichtung eingeben, damit das Schweißgerät mit den passenden Schweißparameter-Sollwerten für den an diesem Bauteil durchzuführenden Schweißvorgang eingestellt wird. Die Benutzereingabe-Einrichtung kann auch zum Erfassen eines maschinenlesbaren Codes wie eines Barcodes eingerichtet sein, über den ein Bediener einen am Bauteil oder auf einem separaten Dokument vorgesehenen Code einlesen kann, der die Bauteil-Kennung enthält.

Die Benutzereingabe-Einrichtung ist vorzugsweise in das Schweißgerät integriert oder an diesem angeschlossen. Auf diese Weise kann der Schweißer die Bauteil-Kennung direkt am Schweißgerät eingeben oder einlesen lassen, wodurch die Bedienung vereinfacht wird.

Mit der Bauteil-Kennung wird dann der entsprechend zugeordnete Bauteil-Datensatz des zugehörigen Bauteils abgerufen. Der Bauteil-Datensatz kann aus einem Speicher des Schweißgeräts oder auch von einem externen Gerät abgerufen werden, beispielsweise von einem über eine Kommunikationsverbindung mit dem Schweißgerät verbundenen Server. Zu diesem Zweck können das Schweißgerät und/oder ein damit verbundener Server einen Speicher aufweisen, auf dem eine Liste gespeichert ist, die verschiedenen Bauteil-Kennungen zugehörige Bauteil-Datensätze zuordnet. Mit der empfangenen Bauteil-Kennung kann dann aus der Liste der zugehörige Bauteil-Datensatz ausgewählt werden.

Erfindungsgemäß gibt der Bauteil-Datensatz einen Schweißfolgeplan für das Bauteil vor, wobei der Schweißfolgeplan eine Reihenfolge für mehrere nacheinander an dem Bauteil durchzuführende Schweißvorgänge sowie Schweißparameter-Sollwerte für die einzelnen Schweißvorgänge vorgibt, und das Schweißgerät wird nacheinander in der vorgegebenen Reihenfolge automatisch entsprechend der vorgegebenen Schweißparameter-Sollwerte für die einzelnen Schweißprozesse eingestellt. Auf diese Weise kann auch bei mehreren an einem Bauteil vorzunehmenden Schweißvorgängen sichergestellt werden, dass die für die einzelnen Schweißvorgänge vorgegebenen Schweißparameter-Sollwerte automatisch und in der richtigen Reihenfolge am Schweißgerät eingestellt werden, so dass auch derartige Schweißvorgänge nicht einer fehleranfälligen Benutzereingabe unterliegen.

Der Schweißfolgeplan gibt eine Reihenfolge für mehrere nacheinander an dem Bauteil durchzuführende Schweißvorgänge vor. Sind an einem Bauteil mehrere Schweißvorgänge erforderlich, beispielsweise zur Erzeugung mehrerer Schweißnähte, so müssen diese in der Regel in einer bestimmten Reihenfolge vorgenommen werden, damit das Bauteil den vorgegebenen Anforderungen genügt. Wird die Reihenfolge der Schweißvorgänge nicht eingehalten, kann dies zum Beispiel zu einem Verziehen des Bauteils führen.

Die vorzunehmenden Schweißvorgänge können beispielsweise durchnummeriert und/oder durch eine Beschreibung ihrer räumlichen Position am Bauteil festgelegt sein. Entsprechend kann der Schweißfolgeplan zum Beispiel eine Zuordnung enthalten, die den einzelnen Schweißvorgängen am Bauteil eine Nummer entsprechend der vorgegebenen Reihenfolge und/oder eine räumliche Position am Bauteil zuordnet.

Weiterhin gibt der Schweißfolgeplan für die einzelnen Schweißvorgänge zugehörige Schweißparameter-Sollwerte vor. Auf diese Weise können für ein Bauteil mehrere Sätze von Schweißparameter-Sollwerten vorgegeben werden, so dass das Schweißgerät für die einzelnen Schweißvorgänge jeweils mit den richtigen Schweißparameter-Sollwerten eingestellt werden kann. Sind an einem Bauteil beispielsweise Schweißnähte und Punktschweißungen anzubringen, so ist es denkbar, dass die Schweißnähte andere Schweißparameter-Sollwerte erfordern als die Punktschweißungen. Ebenso kann es erforderlich sein, verschiedene Schweißnähte mit verschiedenen Schweißparameter-Sollwerten zu schweißen.

Weiterhin wird das Schweißgerät nacheinander in der vorgegebenen Reihenfolge entsprechend der vorgegebenen Schweißparameter-Sollwerte für die einzelnen Schweißprozesse eingestellt. Das Schweißgerät wird demnach zunächst entsprechend der Schweißparameter-Sollwerte des gemäß vorgegebener Reihenfolge ersten Schweißvorgangs eingestellt. Anschließend, insbesondere nach Beendigung des ersten Schweißvorgangs und ggf. Bestätigung des Bedieners über einer Benutzereingabe, wird das Schweißgerät dann entsprechend der Schweißparameter-Sollwerte für den gemäß Reihenfolge zweiten Schweißprozess eingestellt usw. Auf diese Weise können auch komplexe Schweißfolgepläne durch den Bediener abgearbeitet werden, ohne dass dieser die Schweißparameter manuell einstellen müsste.

Erfindungsgemäß wird das Schweißgerät auf eine vordefinierte Benutzereingabe jeweils entsprechend der vorgegebenen Schweißparameter-Sollwerte für den gemäß der vorgegebenen Reihenfolge nächsten Schweißprozess eingestellt. Bei der Benutzereingabe kann es sich beispielsweise um die Betätigung einer bestimmten Taste am Schweißbrenner handeln. Auf diese Weise kann der Benutzer des Schweißgeräts durch Betätigung der entsprechenden Taste die Schweißparameter-Sollwerte für die einzelnen Schweißvorgänge nacheinander in der vorgegebenen Reihenfolge abrufen und die entsprechende automatische Einstellung des Schweißgeräts bewirken, ohne die Schweißparameter selbst manuell einstellen zu müssen. Dadurch wird die Bedienung des Schweißgeräts bei der Abarbeitung eines Schweißfolgeplans stark vereinfacht und Fehler durch falsche Eingaben des Bedieners werden vermieden.

Erfindungsgemäß handelt es sich bei der vordefinierten Benutzereingabe um eine Benutzereingabe am Schweißbrenner, so dass der Bediener nacheinander den Schweißfolgeplan abarbeiten kann, ohne hierzu den Schweißbrenner aus der Hand legen zu müssen. Die Benutzereingabe kann beispielsweise über den Brennertaster erfolgen. Alternativ kann am Schweißbrenner für die vordefinierte Benutzereingabe auch eine gesonderte Eingabeeinrichtung, beispielsweise eine Taste, vorgesehen sein.

Bei einer weiteren Ausführungsform wird eine Benutzerausgabe ausgegeben, die eine Information über den gemäß der vorgegebenen Reihenfolge nächsten Schweißprozess enthält. Die Benutzerausgabe umfasst vorzugsweise eine Information über die Position des nächsten Schweißprozesses in der vorgegebenen Reihenfolge und/oder über die räumliche Position des nächsten Schweißprozesses am Bauteil. Unter der räumlichen Position des nächsten Schweißprozesses am Bauteil wird die räumliche Position der herzustellenden Schweißnaht bzw. des herzustellenden Schweißpunkts verstanden.

Bei der Benutzerausgabe kann es sich insbesondere um eine optische Benutzerausgabe handeln, beispielsweise um eine Anzeige einer dem nächsten Schweißprozess zugeordneten Nummer oder Bezeichnung auf einem Bildschirm. Zusätzlich oder alternativ kann auf einem Bildschirm auch eine grafische Darstellung der räumlichen Position des nächsten Schweißprozesses am Bauteil angezeigt werden. Zusätzlich oder alternativ sind auch akustische Benutzerausgaben denkbar, beispielsweise eine Sprachausgabe der dem nächsten Schweißprozess zugeordneten Nummer oder Bezeichnung. Vorzugsweise ist am Schweißbrenner eine Ausgabeeinrichtung, insbesondere ein Bildschirm oder eine LCD-Anzeige, zur Ausgabe der Benutzerausgabe vorgesehen, so dass der Bediener die Benutzerausgabe direkt am Schweißbrenner ablesen kann.

Weiterhin kann die Benutzerausgabe auch über eine Datenbrille oder einen Schweißhelm mit integrierter Anzeige ausgegeben werden, so dass der Bediener die Benutzerausgabe unmittelbar ablesen kann, ohne den Blick auf einen bestimmten Bildschirm richten zu müssen. Zu diesem Zweck ist das Schweißgerät vorzugsweise dazu eingerichtet, mit einer Datenbrille oder mit einem Schweißhelm mit integrierter Anzeige zu kommunizieren, insbesondere mittels drahtloser Übertragung wie zum Beispiel über eine WLAN- oder Bluetooth-Verbindung. Weiterhin umfasst das System vorzugsweise eine Datenbrille oder einen Schweißhelm mit integrierter Anzeige, die bzw. der zur Ausgabe einer Benutzerausgabe über die Datenbrille bzw. den Schweißhelm über eine Kommunikationsverbindung mit dem Schweißgerät verbindbar ist.

Eine Datenbrille bzw. ein Schweißhelm mit integrierter Anzeige umfasst insbesondere eine Sichtfeld-Anzeige oder einen Sichtfeld-Projektor. Unter einer Sichtfeld-Anzeige wird eine Anzeige verstanden, die im Sichtfeld des Trägers der Datenbrille bzw. des Schweißhelms angeordnet ist. Unter einem Sichtfeld-Projektor wird ein Projektor verstanden, der dazu eingerichtet ist, eine Anzeige, insbesondere eine Benutzerausgabe, in das Sichtfeld des Trägers der Datenbrille bzw. des Schweißhelms zu projizieren.

Die vordefinierte Benutzerausgabe kann insbesondere auf eine vordefinierte Benutzereingabe ausgegeben werden und/oder wenn das Schweißgerät entsprechend der vorgegebenen Soll-Schweißparameter für den gemäß der vorgegebenen Reihenfolge nächsten Schweißprozess eingestellt wird. So ist es beispielsweise denkbar, dass eine vordefinierte Benutzereingabe, wie ein Tastendruck am Schweißbrenner, einerseits die Einstellung des Schweißgeräts für den nächsten Schweißprozess und andererseits die Ausgabe der vordefinierten Benutzerausgabe bewirkt.

Bei einer weiteren Ausführungsform wird ein einem Bediener des Schweißgeräts zugeordneter Bediener-Datensatz erhalten, der Berechtigungsinformationen über die Berechtigung des Bedieners für bestimmte Funktionen des Schweißgeräts enthält, wird auf Basis der Berechtigungsinformationen geprüft, ob der Bedieners zur Durchführung eines gemäß dem Bauteil-Datensatz an dem Bauteil durchzuführenden Schweißvorgangs berechtigt ist, und wird abhängig vom Ergebnis der Berechtigungsprüfung die Durchführung des Schweißvorgangs am Schweißgerät freigegeben oder blockiert. Auf diese Weise kann sichergestellt werden, dass der Bediener des Schweißgeräts zur Durchführung des entsprechenden Schweißvorgangs auch berechtigt ist, beispielsweise über die hierfür erforderlichen Schweißzeugnisse verfügt.

Der Bediener-Datensatz kann beispielsweise dadurch erhalten werden, dass der Bediener-Datensatz vor der Benutzung des Schweißgeräts auf das Schweißgerät übertragen wird, beispielsweise durch einen Vorgesetzten des Bedieners. Weiterhin ist es denkbar, dass der Bediener sich selbst zum Beispiel mittels eines Tokens an einem entsprechenden Lesegerät identifiziert. Bei dem Token kann es sich beispielsweise um einen integrierten Schaltkreis (IC) mit 1-Draht-Schnittstelle handeln (ein sogenannter Kellnerschlüssel wie z.B. der iButton der Fa. Maxim Integrated). Ein solcher Kellnerschlüssel ist sehr robust und daher für den Einsatz beim Schweißen gut geeignet. Alternativ kann auch ein anderer mobiler Kennungs- bzw. Konfigurationsspeicher wie zum Beispiel eine Magnet- oder Chipkarte oder ein RFID-Chip als Token verwendet werden. Insbesondere kann auf dem Token des Bedieners ein Bediener-Datensatz gespeichert sein, der über das Lesegerät ausgelesen und dadurch empfangen wird.

Der Bediener-Datensatz enthält Berechtigungsinformationen über die Berechtigung des Bedieners für bestimmte Funktionen des Schweißgeräts. Beispielsweise kann der Bediener-Datensatz Informationen zu Zeugnissen bzw. zur Gültigkeit von Zeugnissen des Bedieners erhalten, die für bestimmte Funktionen des Schweißgeräts erforderlich sind. Weiterhin kann der Bediener-Datensatz Informationen über bestimmte Schweißparameter-Wertebereiche enthalten, innerhalb derer der Bediener zu arbeiten berechtigt ist.

Auf Basis der Berechtigungsinformationen wird geprüft, ob der Bediener zur Durchführung eines gemäß dem Bauteil-Datensatz an dem Bauteil durchzuführenden Schweißvorgangs berechtigt ist. Zu diesem Zweck erfolgt insbesondere ein Abgleich der für die Durchführung des Schweißvorgangs erforderlichen Funktionen und Schweißparameter-Sollwerte mit den Schweißfunktionen und ggf. Schweißparameter-Wertebereichen, für die der Benutzer gemäß Bediener-Datensatz berechtigt ist. Zur Vereinfachung der Berechtigungsprüfung kann auch der Bauteil-Datensatz Informationen über erforderliche Berechtigungen des Bedieners bzw. über erforderliche Schweißzeugnisse oder Zertifikate des Bedieners enthalten.

Abhängig vom Ergebnis der Berechtigungsprüfung wird die Durchführung des Schweißvorgangs am Schweißgerät dann freigegeben oder blockiert. Damit kann das Schweißgerät die Durchführung von Schweißvorgängen, zu deren Durchführung der Bediener gemäß Bediener-Datensatz nicht berechtigt ist, blockieren, so dass verhindert wird, dass ein Schweißvorgang von einem hierzu unberechtigten, insbesondere nicht qualifizierten Bediener durchgeführt wird.

Bei einer weiteren Ausführungsform wird der Bediener-Datensatz dadurch erhalten, dass eine dem Bediener zugeordnete Bediener-Kennung empfangen und ein der Bediener-Kennung zugeordneter Bediener-Datensatz abgerufen wird. So kann ein Lesegerät vorgesehen sein, an dem sich der Bediener zum Beispiel mittels eines Tokens wie einem Kellnerschlüssel, einer Magnet- oder Chipkarte oder eines RFID-Chips an einem entsprechenden Lesegerät identifizieren kann. Insbesondere kann auf dem Token des Bedieners eine Bediener-Kennung gespeichert sein, die über das Lesegerät ausgelesen und dadurch empfangen wird. Mit dieser Bediener-Kennung kann das Schweißgerät dann den zugehörigen Bediener-Datensatz abrufen, beispielsweise aus einem Speicher des Schweißgeräts oder von einem über eine Kommunikationsverbindung mit dem Schweißgerät verbundenen Server.

Bei einer weiteren Ausführungsform gibt der Bauteil-Datensatz für einen an dem Bauteil durchzuführenden Schweißvorgang einen einzuhaltenden Toleranzbereich für einen oder mehrere Schweißparameter vor. Der oder die betreffenden Schweißparameter werden dann während der Durchführung des Schweißvorgangs automatisch auf Einhaltung des Toleranzbereichs überwacht. Im Falle einer Abweichung eines Schweißparameter-Istwerts vom Toleranzbereich wird eine Fehlerprozedur durchgeführt.

Auf diese Weise wird eine automatische Überwachung von Schweißvorgängen erreicht, so dass beim Auftreten von Schweißfehlern automatisch eine Reaktion in Form einer Fehlerprozedur eingeleitet werden kann.

Der Bauteil-Datensatz kann als Toleranzbereich für einen Schweißparameter beispielsweise eine Ober- und/oder Untergrenze für den betreffenden Schweißparameter vorgeben.

Zur Überwachung der Einhaltung des Toleranzbereichs weist das Schweißgerät vorzugsweise Erfassungsmittel, z.B. Messgeräte, auf, mit denen die Istwerte des betreffenden Schweißparameters ermittelt werden können. Die ermittelten Schweißparameter-Istwerte können dann mit dem vorgegebenen Toleranzbereich für den Schweißparameter verglichen werden.

Die Fehlerprozedur, die bei Abweichung des Schweißparameter-Istwerts vom Toleranzbereich durchgeführt wird, kann beispielsweise eine oder mehrere der folgenden Aktionen umfassen:
- Ausgabe eines Fehlersignals,
- Blockierung nachfolgender Schweißvorgänge,
- Senden einer Nachricht, beispielsweise an einen Vorgesetzten,
- Protokollierung des Fehlers und/oder
- Initiieren und/oder Steuern einer Reparaturaktion.

Bei einer weiteren Ausführungsform werden für einen an dem Bauteil durchgeführten Schweißvorgang Informationen aus dem Bauteil-Datensatz und/oder der Bauteil-Kennung, Informationen über den erfolgen Schweißvorgang und optional Informationen über den das Schweißgerät benutzenden Bediener miteinander verknüpft und gespeichert oder übertragen.

Auf diese Weise wird eine automatische umfassende Dokumentation des Schweißvorgangs erreicht, die eine Zuordnung des Schweißvorgangs zu einem bestimmten Bauteil ermöglicht und damit einen Nachweis und eine Qualitätskontrolle für das Bauteil und den durchgeführten Schweißvorgang erlaubt.

Die verknüpften Informationen aus dem Bauteil-Datensatz und/oder der Bauteil-Kennung umfassen vorzugsweise die Bauteilnummer. Auf diese Weise kann der Datensatz eindeutig einem bestimmten Bauteil zugeordnet werden.

Neben einer Bauteilnummer umfassen die verknüpften Informationen aus dem Bauteil-Datensatz und/oder der Bauteil-Kennung vorzugsweise auch eine zugehörige Auftragsnummer und ggf. eine Baugruppennummer. Ein Auftrag besteht häufig aus mehreren Bauteilen, die ggf. in mehreren Bauteilgruppen zusammengefasst sein können. Entsprechend ist einem Bauteil neben einer Bauteilnummer in der Regel auch eine Auftragsnummer des zugehörigen Auftrags sowie ggf. eine Baugruppennummer zugeordnet. Durch die Verknüpfung dieser Nummern mit den Informationen über den Schweißvorgang können die Informationen zu einer bestimmten Baugruppe oder einem bestimmten Auftrag einfach identifiziert und ggf. ausgewertet werden.

Die Informationen über den erfolgen Schweißvorgang umfassen vorzugsweise die während des Schweißvorgangs aufgezeichneten Schweißparameter-Istwerte. Auf dieser Weise kann der Schweißvorgang an einem bestimmten Bauteil nachträglich überprüft und bewertet werden. Weiterhin können die Informationen aus dem Bauteil-Datensatz insbesondere Informationen über für den Schweißvorgang vorgegebene Schweißparameter-Sollwerte umfassen. Auf diese Werte werden die vorgegebenen Schweißparameter-Sollwerte mit den Schweißparameter-Istwerten verknüpft, so dass die nachträgliche Prüfung erleichtert wird.

Weiterhin kann auch eine Information über die Identität des Schweißgeräts, insbesondere eine Schweißgerät-Kennnummer, mit den übrigen Informationen verknüpft werden, um nachvollziehen zu können, von welchem Schweißgerät die verknüpfte Information stammt bzw. auf welchem Schweißgerät der Schweißvorgang durchgeführt wurde. Dies erleichtert die Zuordnung, die Auswertung und die Verwertung der verknüpften Informationen, insbesondere bei Verwendung mehrerer Schweißgeräte.

Insbesondere wird durch die Verknüpfung der vorgegebenen Schweißparameter-Sollwerte, der aufgezeichneten Schweißparameter-Istwerte und optional der Informationen über den Bediener des Schweißgeräts erreicht, dass die für den Schweißvorgang relevanten Informationen auch nachträglich nachvollziehbar sind und eindeutig einem bestimmten Schweißvorgang bzw. Bauteil zugeordnet werden können.

Die zuvor genannten Informationen können insbesondere dadurch miteinander verknüpft werden, dass sie in einem Protokoll-Datensatz abgelegt werden, beispielsweise in Form eines WPQR-Datensatzes bzw. -Dokuments (WPQR = Welding Procedure Qualification Record). Ein solcher Datensatz kann zum Beispiel auf einem Datenträger gespeichert und dauerhaft archiviert werden. Weiterhin ist es möglich, die Informationen auf einem Datenträger oder in ausgedruckter Form einem Bauteil dauerhaft zuzuordnen, beispielsweise indem er den Unterlagen des betreffenden Bauteils beigefügt wird.

Die Verknüpfung der zuvor genannten Informationen erfolgt vorzugsweise im Schweißgerät, insbesondere in der Steuereinrichtung des Schweißgeräts. Gegenüber einer Verknüpfung der Daten auf einem externen Server hat dies den Vorteil, dass die verknüpften Informationen sehr schnell zur Verfügung stehen und dass sie auch ohne oder bei Ausfall einer übergeordneten Netzwerkstruktur erstellt und gespeichert werden können. So kann für die Erstellung der verknüpften Information sogar auf einen externen übergeordneten Server verzichtet werden.

Bei einer weiteren Ausführungsform weist das Schweißgerät eine Kommunikationsschnittstelle zur drahtlosen Übertragung von Informationen auf, insbesondere eine WLAN-Schnittstelle, und ist dazu eingerichtet, über die Kommunikationsschnittstelle mit anderen, gleichartigen Schweißgeräten Informationen auszutauschen. Vorzugsweise ist das Schweißgerät dazu eingerichtet, die in dem Schweißgerät verknüpften Informationen an ein anderes Schweißgerät zu übermitteln oder in einem anderen Schweißgerät verknüpfte Informationen zu empfangen. Auf diese Weise können beim Einsatz mehrerer Schweißgeräte, zum Beispiel zur Bearbeitung eines Auftrags, einer Bauteilgruppe oder eines Bauteils die verknüpften Informationen von den einzelnen Schweißgeräten an einem einzigen Schweißgerät verfügbar gemacht werden, so dass die Informationen von diesem Schweißgerät gemeinsam übertragen, gespeichert oder an diesem Schweißgerät ausgelesen werden können. Dadurch können die Daten unabhängig von einem übergeordneten Server zusammengestellt werden, so dass auf diesen ggf. sogar verzichtet werden kann. Vorzugsweise weist das System eine Mehrzahl entsprechend eingerichteter Schweißgeräte auf.

Bei einer weiteren Ausführungsform weist das Schweißgerät eine Steuereinrichtung auf, die zur Durchführung und/oder Steuerung des zuvor beschriebenen Verfahrens bzw. einer Ausführungsform davon eingerichtet ist. Insbesondere kann die Steuereinrichtung einen Prozessor umfassen sowie einen damit verbundenen Speicher, der Befehle enthält, dessen Ausführung auf dem Prozessor die Durchführung und/oder Steuerung des Verfahrens veranlasst.

Bei einer weiteren Ausführungsform umfasst das System einen mit dem Schweißgerät über eine Kommunikationsverbindung verbindbaren oder verbundenen Server, wobei der Server einen Speicher mit Bauteil-Datensätzen und optional mit Bediener-Datensätzen aufweist und wobei der Server dazu eingerichtet ist, einen ausgewählten Bauteil-Datensatz und optional einen ausgewählten Bediener-Datensatz an das Schweißgerät zu übermitteln. Die Auswahl des Bauteil-Datensatzes bzw. des Bediener-Datensatzes erfolgt insbesondere abhängig von einer an den Server übermittelten Bauteil-Kennung bzw. Bediener-Kennung. Der Server kann weiterhin dazu eingerichtet sein, das Schweißgerät zu überwachen. Insbesondere kann der Server zum Empfang und zur Überwachung von Betriebsparametern des Schweißgeräts eingerichtet sein.

Die Kommunikationsverbindung ist vorzugsweise digital, beispielsweise elektronisch über ein kabelgebundenes Netzwerk oder über ein Funknetzwerk. Beispielsweise kann der Server innerhalb des Internets oder eines Intranets angeordnet sein, z.B. auch in einer Cloud.

Bei einer weiteren Ausführungsform werden auf Basis der verknüpften Informationen die verbrauchte Menge eines beim Schweißen verwendeten Verbrauchsmaterials, der verbrauchte Schweißstrom und/oder die Betriebszeit des Schweißgeräts (Schweißstunden) bestimmt. Überschreiten der oder die bestimmten Werte vorgegebene Wartungsintervall-Grenzwerte, wird vorzugsweise eine Benutzerinformation über eine Ausgabeeinrichtung ausgegeben oder über eine Kommunikationsverbindung versandt, um den Benutzer über eine erforderliche Wartung des Schweißgeräts zu informieren. Auf diese Weise können Wartungsintervalle abhängig von bestimmten Verbrauchswerten oder Nutzungsdauern, beispielsweise nach einer bestimmten Zahl von Schweißstunden oder nach einer bestimmten Menge an verbrauchtem Schweißdraht, durchgeführt werden. Die Wartungsintervalle sind dadurch an die tatsächliche Nutzung eines Schweißgeräts angepasst, so dass die Lebensdauer des Schweißgeräts erhöht und unnötige Wartungen vermieden werden. Zusätzlich oder alternativ könne aus den verknüpften Informationen auch Verbrauchswerte und/oder die Betriebszeit bei einem Auftrag bestimmt und die bestimmten Werte für eine Vor- oder Nachkalkulation des Auftragswerts oder für ein Entlohnungssystem des Bedieners verwendet werden. Insbesondere können die Steuereinrichtung des Schweißgeräts oder der Server zur Durchführung der zuvor beschriebenen Schritte eingerichtet sein.

Bei einer weiteren Ausführungsform wird auf Basis der verknüpften Informationen die verbrauchte Menge eines beim Schweißen verwendeten Verbrauchsmaterials, insbesondere der Gasverbrauch oder der Schweißdrahtverbrauch, bzw. die verbleibende Restmenge des Verbrauchsmaterials bestimmt. Unterschreitet die verbleibende Restmenge des Verbrauchsmaterials einen vorgegebenen Wert, wird vorzugsweise eine Benutzerinformation über eine Ausgabeeinrichtung ausgegeben oder über eine Kommunikationsverbindung versandt, um den Benutzer über den zur Neige gehenden Verbrauchsmaterialvorrat zu informieren. Insbesondere können die Steuereinrichtung des Schweißgeräts oder der Server zur Durchführung der zuvor beschriebenen Schritte eingerichtet sein.

Bei einer weiteren Ausführungsform wird auf Basis des Bauteil-Datensatzes, der Bauteil-Kennung oder der verknüpften Informationen die Position eines Bauteils innerhalb einer Produktionskette bestimmt. Vorzugsweise wird insbesondere auf eine Anfrage nach der Position eines bestimmten Bauteils eine Benutzerinformation mit der bestimmten Position des Bauteils über eine Ausgabeeinrichtung ausgegeben oder über eine Kommunikationsverbindung versandt.

Da zur Steuerung eines Schweißgeräts ein Bauteil-Datensatz und ggf. eine Bauteil-Kennung empfangen wird, die einem bestimmten Bauteil zugeordnet sind, ist in der Steuereinrichtung des Schweißgeräts oder in einem mit dem Schweißgerät verbundenen Server die Information verfügbar, welches Bauteil an dem Schweißgerät zu einem Zeitpunkt bearbeitet wird. Diese Informationen lassen sich nutzen, um die Position des Bauteils in einer Produktionskette zu bestimmen. Weist die Produktionskette insbesondere mehrere Schweißgeräte auf, so kann auf Basis der für die einzelnen Schweißgeräte empfangenen Bauteil-Datensätze bzw. der Bauteil-Kennungen bestimmt werden, an welchem Schweißgerät das betreffende Bauteil aktuell bearbeitet wird. Auf diese Weise kann der Ablauf der Produktion Bauteilgenau überwacht werden. Insbesondere können die Steuereinrichtung des Schweißgeräts oder der Server zur Durchführung der zuvor beschriebenen Schritte eingerichtet sein.

Bei einer weiteren Ausführungsform umfasst das System einen einem Bauteil zugeordneten Datenträger mit maschinenlesbaren Daten, die einen dem Bauteil zugeordneten Bauteil-Datensatz oder eine dem Bauteil zugeordnete Bauteil-Kennung enthalten. Bei dem Datenträger kann es sich beispielsweise um eine CD, um einen USB-Stick oder auch um ein Druckerzeugnis handeln, auf dem ein maschinenlesbarer Code wie zum Beispiel ein Barcode oder QR-Code aufgedruckt ist.

Beispielsweise kann dem zu schweißenden Bauteil ein Dokument beigefügt werden, auf dem die Bauteil-Kennung in Form eines Barcodes aufgedruckt ist und auf dem weitere Informationen für den Bediener in Klartext oder als Zeichnung aufgedruckt sind, beispielsweise eine Zeichnung des Bauteils mit der Position der herzustellenden Schweißnähte oder -punkte sowie Erläuterungen zum Bauteil und/oder zu den vorzunehmenden Schweißvorgängen.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Figur 1: ein Ausführungsbeispiel des erfindungsgemäßen Systems mit einem Schweißgerät,
- Figur 2a-b: ein Bauteil und einen dem Bauteil zugeordneter Bauteil-Datensatz,
- Figur 3: einen einem Bediener zugeordneten Bediener-Datensatz,
- Figur 4: den Abruf eines Bauteil-Datensatzes und eines Bediener-Datensatzes,
- Figur 5: eine Benutzerausgabe auf der Ein- und Ausgabeeinrichtung des Schweißgeräts aus Fig. 1,
- Figur 6: einen Protokoll-Datensatz,
- Figur 7: ein Ausführungsbeispiel des Verfahrens und
- Figur 8: einen einem Bauteil zugeordneter Datenträger.

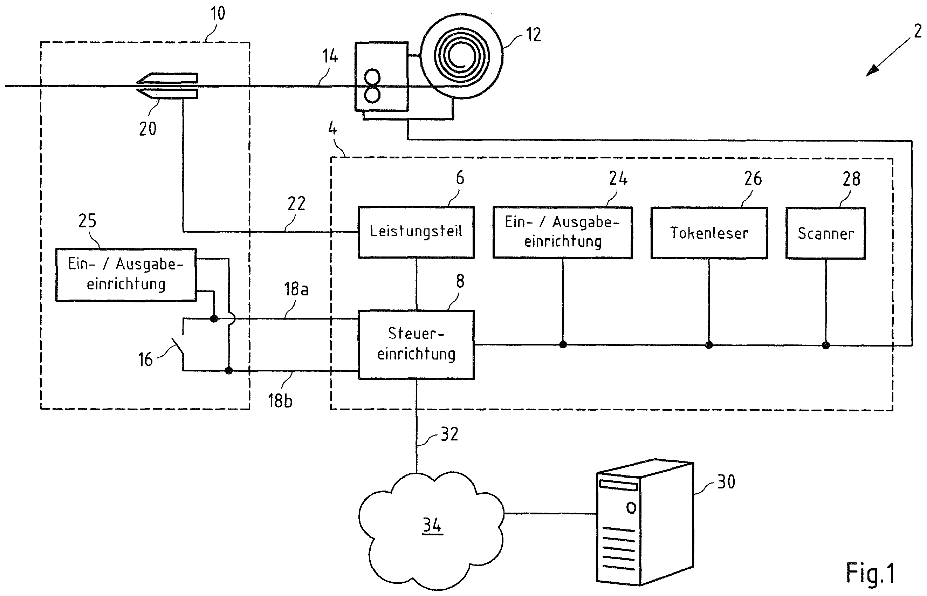

Figur 1 zeigt ein Ausführungsbeispiel des hier beschriebenen Systems 2. Das System 2 umfasst zunächst ein MSG-(Metall-Schutzgas)-Schweißgerät 4 mit einem Leistungsteil 6 und einer Steuereinrichtung 8, einen an dem Schweißgerät 4 angeschlossen Schweißbrenner 10 und eine Drahtfördervorrichtung 12 für den Transport eines Schweißdrahts 14.

Der Schweißbrenner 10 umfasst einen Brennertaster 16, der über zwei Leiter 18a-b mit der Steuereinrichtung 8 verbunden ist. Weiterhin umfasst der Schweißbrenner 10 ein Kontaktrohr 20, das zur Beaufschlagung des Schweißdrahts 14 mit vom Leistungsteil 6 bereitgestellter elektrischer Energie dient. Zu diesem Zweck ist ein Lastausgang des Leistungsteils 6 über einen Leiter 22 elektrisch mit dem Kontaktrohr 20 verbunden. Für den Schweißbetrieb wird der zweite Lastausgang des Leistungsteils 6 zudem mit dem zu schweißenden Bauteil elektrisch verbunden (nicht dargestellt), so dass sich ein geschlossener Stromkreis für den Schweißstrom ergibt.

Die Steuereinrichtung 8 ist dazu eingerichtet, das Schweißgerät 4 zu steuern. Insbesondere ist die Steuereinrichtung 8 dazu eingerichtet, bei Betätigung des Brennertasters 16 einen Schweißvorgang durch entsprechende Ansteuerung des Leistungsteils 6 zu initiieren.

Das Schweißgerät 4 umfasst weiterhin eine Ein- und Ausgabeeinrichtung 24, beispielsweise in Form eines Bildschirms und Eingabetasten oder auch in Form eines Touchscreens. Über die Ein- und Ausgabeeinrichtung 24 können dem Bediener des Schweißgeräts 4 Informationen zu Schweißparametern oder Betriebszuständen des Schweißgeräts 4 angezeigt werden. Weiterhin kann der Bediener über die Ein- und Ausgabeeinrichtung 24 Schweißparameterwerte und Einstellungen des Schweißgeräts 4 verändern und auswählen.

Auch der Schweißbrenner 10 weist eine Ein- und Ausgabeeinrichtung 25 auf, beispielsweise in Form einer LCD-Anzeige und Eingabetasten. Die Ein- und Ausgabeeinrichtung 25 ist über die Leiter 18a-b an die Steuereinrichtung 8 angeschlossen. Auf diese Weise können die beiden Leiter 18a-b nicht nur zur Übermittelung des Brennertaster-Signals, sondern auch zur Übermittlung von Signalen von der Ein- und Ausgabeeinrichtung 25 zur Steuereinrichtung 8 bzw. von der Steuereinrichtung 8 zur Ein- und Ausgabeeinrichtung 25 genutzt werden. Alternativ können auch separate Leitungen zwischen Ein- und Ausgabeeinrichtung 25 und Steuereinrichtung 8 vorgesehen sein.

Zusätzlich oder alternativ kann das System 2 auch eine Datenbrille oder einen Schweißhelm mit integrierter Anzeige (nicht dargestellt) umfassen, die bzw. der über eine drahtlose Kommunikationsverbindung, z.B. über eine WLAN- oder Bluetooth-Verbindung mit dem Schweißgerät 4 verbindbar ist.

An die Steuereinrichtung 8 ist weiterhin ein Tokenleser 26, beispielsweise ein Lesegerät für sogenannte Kellnerschlüssel oder ein Kartenleser, angeschlossen, mit dem Identifikationstoken von Bedienern des Schweißgeräts 4 eingelesen werden können. Auf diese Weise kann sich ein Bediener durch Einlesen seines Identifikationstokens mit dem Tokenleser 26 am Schweißgerät 4 anmelden, so dass z.B. Funktionen des Schweißgeräts entsprechend der Berechtigung des Bedieners freigeschaltet werden.

Das Schweißgerät 4 weist weiterhin noch einen Barcodescanner 28 auf, dessen Funktion weiter unten noch genauer erläutert wird.

Neben dem Schweißgerät 4 umfasst das System 2 noch einen Server 30, der mittels einer Kommunikationsverbindung 32 über ein Netzwerk 34 mit der Steuereinrichtung 8 des Schweißgeräts 4 verbunden ist.

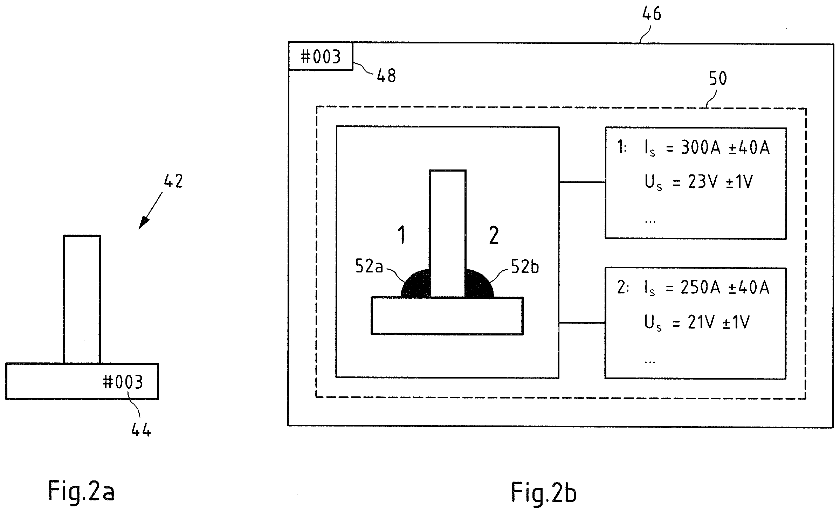

Figur 2a zeigt in schematischer Darstellung ein Bauteil 42, das mit dem Schweißgerät 4 aus Figur 1 geschweißt werden soll. Dem Bauteil 42 ist eine Bauteil-Kennung 44 zugeordnet, die beispielsweise im Klartext oder als Barcode an dem Bauteil angebracht, beispielsweise aufgedruckt sein kann.

Figur 2b zeigt in schematischer Darstellung einen dem Bauteil 42 zugeordneten Bauteil-Datensatz 46, der Informationen über am Bauteil 42 durchzuführende Schweißvorgänge enthält. Der Bauteil-Datensatz 46 umfasst zunächst einen Verweis 48 auf die Bauteil-Kennung 44 und ist auf diese Weise dem bestimmten Bauteil 42 zugeordnet. Weiterhin umfasst der Bauteil-Datensatz 46 einen Schweißfolgeplan 50, der eine Reihenfolge von nacheinander an dem Bauteil 42 vorzunehmenden Schweißvorgängen vorgibt. Zu diesem Zweck kann der Bauteil-Datensatz 46 eine Information über die räumliche Position der bei den Schweißvorgängen herzustellenden Schweißnähten 52a-b am Bauteil 42 umfassen und den einzelnen Schweißnähte 52a-b eine Ziffer ("1","2") zuordnen, die der vorgegebenen Reihenfolge der zugehörigen Schweißvorgänge entspricht.

Neben der Reihenfolge gibt der Bauteil-Datensatz 46 zudem noch Schweißparameter-Sollwerte für die einzelnen Schweißvorgänge "1" und "2" vor, beispielsweise für den Schweißstrom und die Schweißspannung. Darüber hinaus kann der Bauteil-Datensatz 46 vorzugsweise auch Toleranzbereiche für die jeweiligen Schweißparameter vorgeben, die beim entsprechenden Schweißvorgang einzuhalten sind. So ist im dargestellten Beispiel beim Schweißvorgang "1" ein Schweißstrom-Sollwert von 300 A und ein Toleranzbereich von +/- 40A, d.h. von 260 bis 340 A angegeben.

Damit enthält der Bauteil-Datensatz 46 die relevanten Informationen, die ein Bediener des Schweißgeräts 4 benötigt, um das Bauteil 42 mit den vorgegebenen Schweißparametern in der richtigen Reihenfolge schweißen zu können.

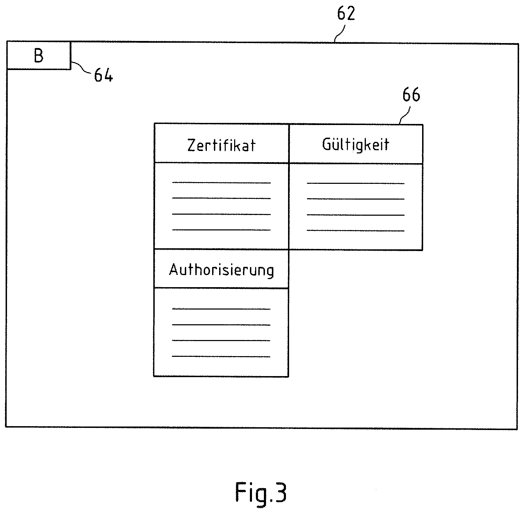

Figur 3 zeigt in schematischer Darstellung einen Bediener-Datensatz 62, der einem bestimmten Bediener des Schweißgeräts 4 zugeordnet ist. Der Bediener-Datensatz 62 umfasst einen Verweis auf eine Bediener-Kennung 64, die den Datensatz 62 eindeutig einem bestimmten Bediener ("B") zuordnet, beispielsweise über eine Personalnummer oder den Namen des Bedieners. Weiterhin umfasst der Bediener-Datensatz 62 Informationen 66 über Schweißzertifikate des betreffenden Bedieners und deren Gültigkeit sowie über Authorisierungen des Bedieners, die ihn zur Nutzung bestimmter Funktionen des Schweißgeräts 4 und zum Arbeiten innerhalb bestimmter Schweißparameter-Wertebereiche berechtigen.

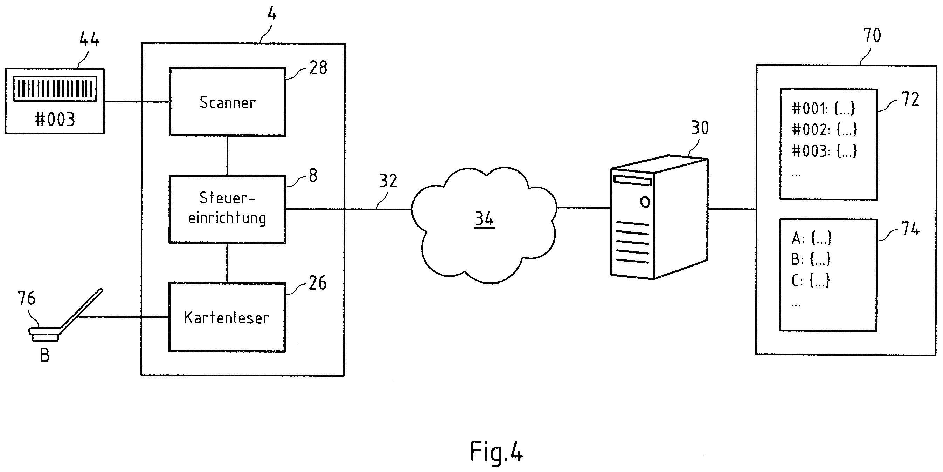

Figur 4 zeigt nun den Abruf eines Bauteil-Datensatzes 46 und eines Bediener-Datensatzes 62. Der Server 30 umfasst einen Speicher 70, auf dem eine Liste 72 hinterlegt ist, die verschiedenen Bauteilen über die jeweilige Bauteil-Kennung ("#001", "#002", "#003") einen zugehörigen Bauteil-Datensatz zuordnet. Weiterhin umfasst der Speicher 70 eine Liste 74, die verschiedenen Bedienern über die jeweilige Bediener-Kennung ("A", "B", "C") einen zugehörigen Bediener-Datensatz zuordnet.

Bei Inbetriebnahme des Schweißgeräts kann sich der Bediener nun am Schweißgerät 4 anmelden, indem er seinen Identifikationstoken 76, beispielsweise seinen Kellnerschlüssel (wie in Fig. 4 abgebildet) oder seine Magnet- oder Chipkarte, am Tokenleser 26 des Schweißgeräts 4 einlesen lässt. Der Tokenleser 26 liest aus dem Identifikationstoken 76 die Benutzer-Kennung ("B") des Benutzers aus. Die Steuereinrichtung 8 ist dazu eingerichtet, mit der auf diese Weise empfangenen Bediener-Kennung den zugehörigen Bediener-Datensatz abzurufen, indem sie eine entsprechende Anfrage mit der Bediener-Kennung über die Kommunikationsverbindung 32 an den Server 30 übermittelt. Der Server 30 wählt anhand der Bediener-Kennung den zugehörigen Bediener-Datensatz 62 aus der Liste 74 aus und übermittelt diesen über die Kommunikationsverbindung 32 an die Steuereinrichtung 8 des Schweißgeräts 4.

Das Schweißgerät kann nun abhängig von dem empfangenen Bediener-Datensatz 62 konfiguriert werden. Insbesondere können diejenigen Funktionen des Schweißgeräts, zu deren Nutzung der Bediener nicht berechtigt ist, deaktiviert werden.

Zum Schweißen eines bestimmten Bauteils 42, identifiziert der Bediener das betreffende Bauteil am Schweißgerät, indem er die entsprechende Bauteil-Kennung 44 mit den Scanner 28 in das Schweißgerät 4 einliest. Die Steuereinrichtung 8 ist dazu eingerichtet, mit der auf diese Weise empfangenen Bauteil-Kennung den zugehörigen Bauteil-Datensatz abzurufen, indem sie eine entsprechende Anfrage mit der Bauteil-Kennung über die Kommunikationsverbindung 32 an den Server 30 übermittelt. Der Server 30 wählt anhand der Bauteil-Kennung den zugehörigen Bauteil-Datensatz 46 aus der Liste 72 aus und übermittelt diesen über die Kommunikationsverbindung 32 an die Steuereinrichtung 8 des Schweißgeräts 4.

Die Steuereinrichtung 8 ist dazu eingerichtet, das Schweißgerät 4 anhand des empfangenen Bauteil-Datensatzes zu konfigurieren. Dies wird nun am Beispiel des in Fig. 2b dargestellten Bauteil-Datensatzes 46 erläutert.

Die Steuereinrichtung 8 stellt das Schweißgerät 4 und insbesondere das Leistungsteil 6 zunächst anhand der durch den Bauteil-Datensatz 46 vorgegebenen Schweißparameter-Sollwerte für den gemäß vorgegebener Reihenfolge zuerst durchzuführenden Schweißvorgang ein (Is = 300 A, Us = 23 V).

Weiterhin gibt die Steuereinrichtung über eine oder beide der Ein- und Ausgabeeinrichtungen 24 und 25 eine Benutzerausgabe 80 aus, mit der der Benutzer über den nächsten vorzunehmenden Schweißvorgang informiert wird.

Umfasst das System eine Datenbrille oder einen Schweißhelm mit integrierter Anzeige, so kann die Steuereinrichtung die Benutzerausgabe 80 auch über die Datenbrille oder die Anzeige des Schweißhelms ausgeben, indem es über die Kommunikationsverbindung zur Datenbrille bzw. zum Schweißhelm einen entsprechenden Steuerbefehl an die Datenbrille bzw. den Schweißhelm sendet.

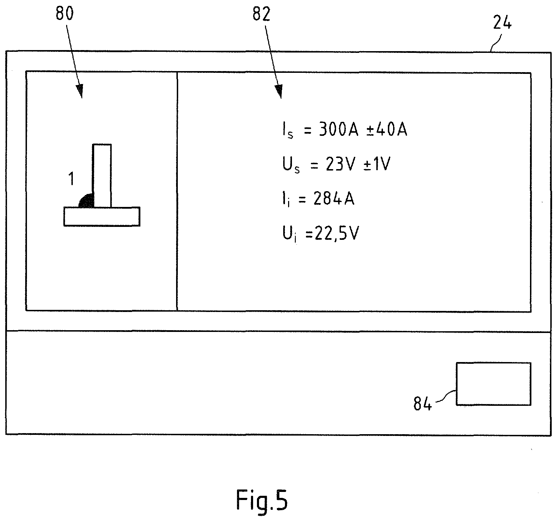

Figur 5 zeigt exemplarisch eine mögliche Benutzerausgabe 80 auf der Ein- und Ausgabeeinrichtung 24 des Schweißgeräts. Die Benutzerausgabe 80 umfasst in Fig. 5 eine grafische Darstellung des Bauteils 42 auf einem Bildschirm der Ein- und Ausgabeeinrichtung 24, wobei in der grafischen Darstellung die Position und die Nummer des nächsten Schweißvorgangs (hier "1") dargestellt sind.

Auf dem Bildschirm können zusätzlich auch noch die durch den Bauteil-Datensatz 46 für den entsprechenden Schweißvorgang vorgegebenen Schweißparameter-Sollwerte (I_{S}, U_{S}) sowie -Toleranzbereiche ausgegeben werden. Während der Durchführung des Schweißvorgangs können zudem die jeweiligen zugehörigen Istwerte (I_{I}, U_{I}) ausgegeben werden (s. Pfeil 82 in Fig. 5).

Eine entsprechende Benutzerausgabe 80 kann auch auf der Ein- und Ausgabeeinrichtung 25 des Schweißbrenners 10 ausgegeben werden. Beispielsweise können die Nummer des nächsten Schweißvorgangs und ggf. Schweißparameter-Sollwerte, -Toleranzbereiche und/oder -Istwerte auf einer LCD-Anzeige am Schweißbrenner 10 ausgegeben werden.

Umfasst das System 2 eine Datenbrille oder einen Schweißhelm mit integrierter Anzeige, kann eine entsprechende Benutzerausgabe 80 auch über die Datenbrille bzw. den Schweißhelm mit integrierter Anzeige ausgegeben werden.

Nach Durchführung des ersten Schweißvorgangs kann der Bediener dann beispielsweise mittels eines Tastendrucks auf einer dafür vorgesehenen Taste 84 der Ein- und Ausgabeeinrichtung 24 oder auch auf einer Taste am Schweißbrenner, beispielsweise mit dem Brennertaster 17 oder einer dafür vorgesehenen Taste der Ein- und Ausgabeeinrichtung 25 den nächsten Schweißvorgang abrufen. Die Steuereinrichtung 8 stellt das Schweißgerät 4 und insbesondere das Leistungsteil 6 dann entsprechend der Schweißparameter-Sollwerte für den gemäß vorgegebener Reihenfolge nächsten Schweißvorgang ein und aktualisiert die Benutzerausgabe 80 durch Anzeige der Position und der Nummer des nächsten Schweißvorgangs. Auf diese Weise kann der Bediener die Schweißvorgänge nacheinander abrufen, wobei jeweils die korrekten vorgegebenen Schweißparameter-Sollwerte automatisch eingestellt werden und der Bediener die Position des aktuellen Schweißvorgangs am Bauteil am Bildschirm 24 ablesen kann.

Die Steuereinrichtung 8 ist darüber hinaus dazu eingerichtet, während der Durchführung der einzelnen Schweißvorgänge die Schweißparameter zu überwachen, insbesondere auf Einhaltung eines durch den Bauteildatensatz vorgegebenen Toleranzbereichs. Überschreiten die Istwerte I_{I} bzw. U_{I} die vorgegebenen Toleranzbereiche, kann z.B. eine Fehlermeldung auf dem Bildschirm 24 ausgegeben werden.

Die Steuereinrichtung 8 ist weiter dazu eingerichtet, die während der Durchführung eines Schweißvorgangs erfassten Istwerte der Schweißparameter zusammen mit den vom Bauteil-Datensatz vorgegebenen Sollwerten und Informationen zum Bediener aus dem Bediener-Datensatz in einem gemeinsamen Protokoll-Datensatz zu speichern, so dass im Nachhinein nachvollziehbar ist, welcher Schweißer mit welchen Parameterwerten welche Schweißnähte in welcher Reihenfolge geschweißt hat. Ein solcher Protokoll-Datensatz dient zur Qualitätssicherung und Dokumentation des Schweißvorgangs.

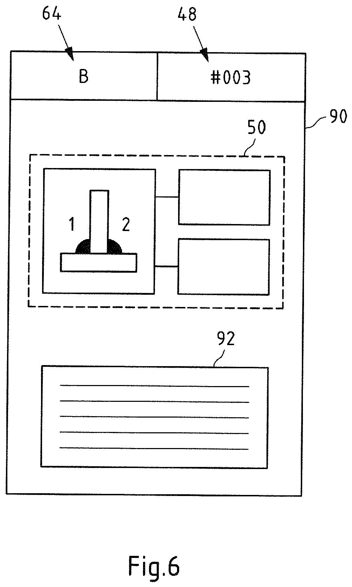

Figur 6 zeigt exemplarisch einen solchen Protokoll-Datensatz 90, in dem die Bediener-Kennung 64, die Bauteil-Kennung 48, der Schweißfolgeplan 50 sowie ein Datensatz 92 mit den aufgezeichneten Schweißparameter-Istwerten während der Durchführung der einzelnen Schweißvorgänge sowie gegebenenfalls mit Informationen über besondere Vorkommnisse wie zum Beispiel einem Überschreiten vorgegebener Toleranzbereiche zusammen gespeichert und dadurch dauerhaft miteinander verknüpft sind. Der Protokoll-Datensatz 90 kann auch noch weitere Informationen umfassen, beispielsweise eine Kennung des Schweißgeräts. Der Datensatz 90 kann beispielsweise über die Kommunikationsverbindung 32 an den Server 30 übermittelt und dort gespeichert oder auch über einen Drucker (nicht dargestellt) ausgedruckt werden.

Mit dem Protokoll-Datensatz 90 werden im Schweißgerät 4 damit Informationen aus dem Bauteil-Datensatz 46, Informationen über den erfolgten Schweißvorgang, und Informationen über den das Schweißgerät benutzenden Bediener miteinander verknüpft und gespeichert bzw. übertragen, so dass die verknüpften Informationen zur weiteren Verwertung bzw. Auswertung schnell und zuverlässig zur Verfügung stehen.

Die Steuereinrichtung 8 oder der Server 30 können insbesondere dazu eingerichtet sein, anhand der verknüpften Informationen die verbleibende Restmenge an Verbrauchsmaterial, z.B. an Schweißdraht 14 oder Schweißgas, zu überwachen und bei Unterschreiten eines vorgegebenen Werts eine Benutzerinformation auszugeben, dass das entsprechende Verbrauchsmaterial aufzufüllen bzw. nachzubestellen ist. Weiterhin können anhand der verknüpften Informationen die verbrauchte Menge eines beim Schweißen verwendeten Verbrauchsmaterials, der verbrauchte Schweißstrom und/oder die Betriebszeit des Schweißgeräts 4 (Schweißstunden) bestimmt werden, um bei Überschreiten vorgegebener Wartungsintervall-Grenzwerte eine Benutzerinformation auszugeben, dass eine Wartung des Schweißgeräts 4 zu erfolgen hat. Weiterhin können die verknüpften Informationen auch verwendet werden, um damit Verbrauchswerte und/oder die Betriebszeit bei einem Auftrag zu bestimmt und daraus eine Vor- oder Nachkalkulation des Auftragswerts oder einen Lohn eines Bedieners zu berechnen.

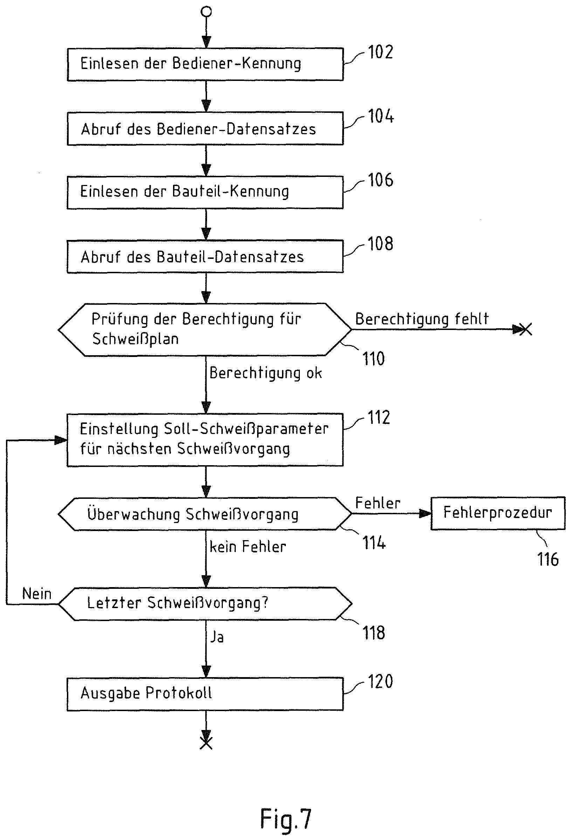

Figur 7 zeigt ein Flussdiagramm eines Ausführungsbeispiels des erfindungsgemäßen Verfahrens, das mit dem System 2 durchgeführt wird bzw. durchgeführt werden kann.

Im ersten Schritt 102 des Verfahrens wird die Bediener-Kennung 64 über den Tokenleser 26 eingelesen, wenn sich der Bediener mit seinem Identifikationstoken 76 am Schweißgerät 4 identifiziert. Im Schritt 104 ruft die Steuereinrichtung 8 sodann den zugehörigen Bediener-Datensatz 90 ab, indem sie die empfangene Bediener-Kennung 64 an den Server 30 übermittelt und vom Server den zugehörigen Bediener-Datensatz 90 empfängt. Im Schritt 106 wird die Bauteil-Kennung 44 mit dem Scanner 28 eingelesen, wenn der Bediener das Bauteil oder ein zugehöriges Dokument mit dem Bauteilcode vor den Scanner 28 hält. Die Steuereinrichtung 8 ruft sodann im Schritt 108 vom Server 30 den zugehörigen Bauteil-Datensatz 46 ab.

Im Schritt 110 prüft die Steuereinrichtung anhand des Bediener-Datensatzes 90 und des Bauteil-Datensatzes 46, ob der angemeldeten Bediener über ausreichende Berechtigungen zur Durchführung der vom Bauteil-Datensatz 46 vorgesehenen Schweißvorgänge verfügt. Ist dies nicht der Fall, so wird die Durchführung der Schweißvorgänge blockiert und das Schweißgerät 4 zeigt auf dem Bildschirm 24 eine Fehlermeldung an. Falls der Bediener über die erforderlichen Berechtigungen verfügt, erfolgt im nächsten Schritt 112 die Einstellung der Schweißparameter für den gemäß Schweißfolgeplan 50 ersten Schweißvorgang mit den durch den Bauteil-Datensatz 46 vorgegebenen Schweißparameter-Sollwerten.

Während der Bediener den Schweißvorgang durchführt, wird der Schweißbetrieb im Schritt 114 von der Steuereinrichtung 8 laufend überwacht. Falls die Schweißparameter während des laufenden Schweißverfahrens in einen unzulässigen Bereich gelangen, d.h. den vom Bauteil-Datensatz 46 vorgegebenen Toleranzbereich verlassen, wird automatisch eine Fehlerprozedur 116 aufgerufen. Die Fehlerprozedur 116 kann insbesondere eine oder mehrere der folgenden Aktionen umfassen: Blockierung der weiteren Ausführung des Schweißvorgangs, Übermitteln einer Nachricht, z.B. an den Server 30, Anzeigen einer Fehlermeldung auf dem Bildschirm 24 etc.

Wenn der Schweißvorgang beendet ist, bestätigt der Bediener das Ende des Schweißvorgangs über einen Tastendruck an einer entsprechenden Taste der Ein- und Ausgabeeinrichtung 25 des Schweißbrenners 10.

Wenn der Schweißvorgang fehlerfrei durchgeführt wurde, prüft die Steuereinrichtung 8 im Schritt 118, ob es sich bei dem abgeschlossenen Schweißvorgang um den letzten Schweißvorgang gemäß Schweißfolgeplan handelte. Falls noch ein Schweißvorgang folgt, springt das Verfahren zum Schritt 112 zurück, so dass die Einstellungen der Soll-Schweißparameter für den nächstfolgenden Schweißvorgang gemäß Schweißfolgeplan 50 eingestellt werden können.

Nach dem letzten Schweißvorgang speichert die Steuereinrichtung 8 den Protokoll-Datensatz 90, der Informationen des Bediener-Datensatzes 90, des Bauteil-Datensatzes 46, und der während der durchgeführten Schweißvorgänge erfassten Schweißparameter-Istwerte miteinander verknüpft. Der Protokoll-Datensatzes 90 kann beispielsweise auf den Server 30 übertragen werden.

Die Steuereinrichtung 8 des Schweißgeräts ist dazu eingerichtet, das Schweißgerät 4 entsprechend des in Figur 7 dargestellten Verfahrens zu steuern. Zu diesem Zweck weist die Steuereinrichtung 8 insbesondere einen Mikroprozessor und einen damit verbundenen Speicher auf, auf dem ein Computerprogramm gespeichert ist, welches Befehle umfasst, deren Ausführung auf den Mikroprozessor die Durchführung des zuvor beschriebenen Verfahrens initiiert bzw. steuert.

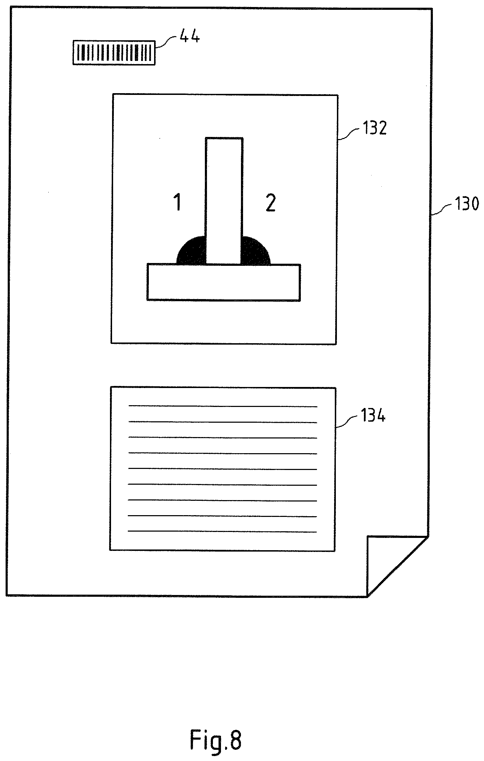

Figur 8 zeigt einen Datenträger in Form eines Dokuments 130, der einem Bauteil beigefügt werden kann, um die Bauteil-Kennung des Bauteils und/oder Informationen für einen durchzuführenden Schweißvorgang am Bauteil anzuzeigen. Auf dem Dokument 130 ist die Bauteil-Kennung 44 aufgedruckt, z.B. in Form eines Barcodes.

Der Bediener kann dann mit dem Scanner 28 den Barcode 44 einscannen, so dass das Schweißgerät 4 automatisch mit dem vom Server 30 abgerufenen zugehörigen Bauteil-Datensatz eingestellt wird. Mit einem solchen Dokument 130, kann beispielsweise darauf verzichtet werden, die Bauteil-Kennung direkt am Bauteil anzubringen (wie beim Bauteil 42 in Figur 2a). Zu diesem Zweck ist das Dokument 130 über die Bauteil-Kennung 44 mit einem Bauteil-Datensatz 46 verknüpft, der in einem Speicher des Schweißgeräts 4 oder des Servers 30 hinterlegt ist.

Das Dokument 130 kann weiterhin noch weitere Informationen für den Bediener enthalten, beispielsweise eine grafische Darstellung 132 des Bauteils mit Angabe der Reihenfolge und Position der vorzunehmen Schweißvorgänge und ggf. einer Beschreibung 134 der vorzunehmenden Schweißvorgänge 134. Wenn das Dokument 130 eine grafische Darstellung 132 des Bauteils 42 sowie die Positionen der vorzunehmenden Schweißvorgänge zeigt, reicht es aus, wenn das Schweißgerät auf dem Bildschirm 24 anstelle einer grafischen Darstellung nur die jeweilige Nummer des aktuellen Schweißvorgangs anzeigt, da der Bediener die räumliche Position des Schweißvorgangs am Bauteil dann mit Hilfe des Dokuments 130 zuordnen kann.

Weiterhin kann das Dokument 130 beispielsweise einzelne oder mehrere der folgenden Informationen enthalten, die der Bediener für die Durchführung der Schweißvorgänge benötigt:
- Bauteilnummer / Bauteilebezeichnung
- Baugruppennummer
- Auftragsnummer
- Informationen zu benötigte Materialien wie Schweißzusatzmaterial, Schweißdraht-Durchmesser, Schutzgas etc.
- Schweißgeschwindigkeit
- Schweißparameter-Sollwerte und Nahtposition für alle Schweißnähte
- Toleranzbereich für die Überwachung der Schweißparameter-Sollwerte
- Anforderungen an den ausführenden Bediener (Gültigkeit von Schweißerzeugnissen)
- Aktionsanweisungen bei gemeldeten Schweißfehlern (Nacharbeit, Ausschleifen, Reparaturschweißung)
- Graphische Elemente zur Verdeutlichung von Bauteil, Nahtposition, Nahtart, a-Maß, Schweißrichtung etc.

Das Dokument 130 kann als Papierdokument oder auch in elektronischer Form, z.B. auf einer Chipkarte, einem Speicherchip, einem USB-Stick, einem RFID-Chip o.ä. bereitgestellt werden.

Mit dem beschriebenen System, dem beschriebenen Verfahren und dem zur Durchführung des Verfahrens vorgesehenen Computerprogramm kann die Durchführung komplexer Schweißvorgänge an Bauteilen erheblich vereinfacht werden. Insbesondere muss der Bediener die einzelnen Schweißparameter nicht mehr selbst vorgeben, sondern gibt lediglich eine Bauteil-Kennung ein, anhand derer sich das System alle für den Schweißvorgang erforderlichen Informationen beschafft und das Schweißgerät 4 entsprechend des vorgesehenen Schweißfolgeplan richtig konfiguriert.

## Patentansprüche

1. Verfahren zur Steuerung eines Schweißgeräts, ausgeführt auf mindestens einem Gerät, darunter mindestens ein Schweißgerät (4) mit einem an dem Schweißgerät (4) angeschlossenen Schweißbrenner (10),
- bei dem ein einem bestimmten Bauteil (42) zugeordneter Bauteil-Datensatz (46) erhalten wird, der Schweißparameter-Sollwerte für einen an dem Bauteil (42) durchzuführenden Schweißvorgang vorgibt,
- bei dem das Schweißgerät (4) automatisch entsprechend der vorgegebenen Schweißparameter-Sollwerte für den Schweißvorgang eingestellt wird,
- bei dem der Bauteil-Datensatz (46) einen Schweißfolgeplan (50) für das Bauteil (42) vorgibt, wobei der Schweißfolgeplan (50) eine Reihenfolge für mehrere nacheinander an dem Bauteil (42) durchzuführende Schweißvorgänge sowie Schweißparameter-Sollwerte für die einzelnen Schweißvorgänge vorgibt, und
- bei dem das Schweißgerät (4) nacheinander in der vorgegebenen Reihenfolge automatisch entsprechend der vorgegebenen Schweißparameter-Sollwerte für die einzelnen Schweißprozesse eingestellt wird,
**dadurch gekennzeichnet,**
- **dass** das Schweißgerät (4) auf eine vordefinierte Benutzereingabe jeweils entsprechend der vorgegebenen Schweißparameter-Sollwerte für den gemäß der vorgegebenen Reihenfolge nächsten Schweißprozess eingestellt wird, wobei es sich bei der vordefinierten Benutzereingabe um eine Benutzereingabe am Schweißbrenner (10) handelt, so dass ein Bediener nacheinander den Schweißfolgeplan (50) abarbeiten kann, ohne hierzu den Schweißbrenner (10) aus der Hand legen zu müssen.

2. Verfahren nach Anspruch 1,
- bei dem der dem bestimmten Bauteil (42) zugeordnete Bauteil-Datensatz (46) dadurch erhalten wird, dass eine dem bestimmten Bauteil (42) zugeordnete Bauteil-Kennung (44) empfangen und ein der Bauteil-Kennung (44) zugeordneter Bauteil-Datensatz (46) abgerufen wird.

3. Verfahren nach Anspruch 1 oder 2,
- bei dem eine Benutzerausgabe (80) ausgegeben wird, die eine Information über den gemäß der vorgegebenen Reihenfolge nächsten Schweißprozess enthält.

4. Verfahren nach einem der Ansprüche 1 bis 3,
- bei dem ein einem Bediener des Schweißgeräts (4) zugeordneter Bediener-Datensatz (62) erhalten wird, der Berechtigungsinformationen über die Berechtigung des Bedieners für bestimmte Funktionen des Schweißgeräts (4) enthält,
- bei dem auf Basis der Berechtigungsinformationen geprüft wird, ob der Bediener zur Durchführung eines gemäß dem Bauteil-Datensatz (46) an dem Bauteil (42) durchzuführenden Schweißvorgangs berechtigt ist, und
- bei dem abhängig vom Ergebnis der Berechtigungsprüfung die Durchführung des Schweißvorgangs am Schweißgerät (4) freigegeben oder blockiert wird.

5. Verfahren nach Anspruch 4,
- bei dem der Bediener-Datensatz (62) dadurch erhalten wird, dass eine dem Bediener zugeordnete Bediener-Kennung (64) empfangen und ein der Bediener-Kennung (64) zugeordneter Bediener-Datensatz (62) abgerufen wird.

6. Verfahren nach einem der Ansprüche 1 bis 5,
- bei dem der Bauteil-Datensatz (46) für einen an dem Bauteil (42) durchzuführenden Schweißvorgang einen einzuhaltenden Toleranzbereich für einen oder mehrere Schweißparameter vorgibt,
- bei dem die betreffenden Schweißparameter während der Durchführung des Schweißvorgangs automatisch auf Einhaltung des Toleranzbereichs überwacht werden und
- bei dem im Falle einer Abweichung eines Schweißparameter-Istwertes vom Toleranzbereich eine Fehlerprozedur durchgeführt wird.

7. Verfahren nach einem der Ansprüche 1 bis 6,
- bei dem für einen an dem Bauteil (42) durchgeführten Schweißvorgang Informationen aus dem Bauteil-Datensatz (46), insbesondere für den Schweißvorgang vorgegebene Schweißparameter-Sollwerte, Informationen über den erfolgten Schweißvorgang, insbesondere über während des Schweißvorgangs aufgezeichnete Schweißparameter-Istwerte, und optional Informationen über den das Schweißgerät benutzenden Bediener miteinander verknüpft und gespeichert oder übertragen werden.

8. System (2) umfassend ein Schweißgerät (4) und einen Schweißbrenner (10),
**dadurch gekennzeichnet,**
**dass** das System Steuermittel aufweist, die zur Durchführung des Verfahrens nach einem der Ansprüche 1 bis 7 eingerichtet sind.

9. System nach Anspruch 8,
**dadurch gekennzeichnet, dass** das Schweißgerät (4) eine Steuereinrichtung (8) aufweist, die zur Durchführung des Verfahrens nach einem der Ansprüche 1 bis 7 eingerichtet ist.

10. System nach Anspruch 8 oder 9, weiter umfassend einen mit dem Schweißgerät (4) über eine Kommunikationsverbindung (32) verbindbaren oder verbundenen Server (30), wobei der Server (30) einen Speicher (70) mit Bauteil-Datensätzen (46) und optional mit Bediener-Datensätzen (62) umfasst und wobei der Server (30) dazu eingerichtet ist, einen ausgewählten Bauteil-Datensatz (46) und optional einen ausgewählten Bediener-Datensatz (62) an das Schweißgerät (4) zu übermitteln.

11. System nach einem der Ansprüche 8 bis 10, weiter umfassend einen einem Bauteil (42) zugeordneten Datenträger (130) aufweisend maschinenlesbare Daten mit einem dem Bauteil (42) zugeordneten Bauteil-Datensatz (46) oder einer dem Bauteil (42) zugeordneten Bauteil-Kennung (44).

12. System nach einem der Ansprüche 8 bis 11, weiter umfassend eine Datenbrille oder einen Schweißhelm mit integrierter Anzeige, wobei die Datenbrille bzw. der Schweißhelm über eine Kommunikationsverbindung mit dem Schweißgerät (4) verbindbar ist und das Schweißgerät (4), insbesondere dessen Steuereinrichtung (8), dazu eingerichtet ist, eine Benutzerausgabe über die Datenbrille bzw. den Schweißhelm auszugeben.

13. Computerprogramm umfassend Programmanweisungen,
**dadurch gekennzeichnet,**
**dass** die Programmanweisungen mindestens einen Prozessor zur Ausführung des Verfahrens gemäß einem der Ansprüche 1 bis 7 veranlassen, wenn das Computerprogramm auf dem mindestens einen Prozessor läuft.

## Claims

1. Method for controlling a welding device, carried out on at least one device, including at least one welding device (4) with a welding torch (10) connected to the welding device (4),
- in which a part data set (46) assigned to a determined part (42) is obtained, which predefines welding parameter target values for a welding process to be performed on the part (42),
- in which the welding device (4) is set automatically in accordance with the predefined welding parameter target values for the welding process,
- in which the part data set (46) predefines a welding sequence plan (50) for the part (42), wherein the welding sequence plan (50) predefines an order for a plurality of welding processes to be performed successively on the part (42) and welding parameter target values for the individual welding processes, and
- in which the welding device (4) is set automatically in accordance with the predefined welding parameter target values for the individual welding processes successively in the predefined order,
**characterised in that**
- in reaction to a predefined user input, the welding device (4) is respectively set in accordance with the predefined welding parameter target values for the welding process which is next according to the predefined order, wherein the predefined user input is a user input on the welding torch (10) such that an operator can successively process the welding sequence plan (50) without having to put down the welding torch (10) to do so.

2. Method according to claim 1,
- in which the part data set (46) assigned to the determined part (42) is obtained in that a part identifier (44) assigned to the determined part (42) is received and a part data set (46) assigned to the part identifier (44) is retrieved.

3. Method according to claim 1 or 2,
- in which a user output (80) is output, which user output contains information about the welding process which is next according to the predefined order.

4. Method according to any one of claims 1 to 3,
- in which an operator data set (62) assigned to an operator of the welding device (4) is obtained, which operator data set contains permissions information about the permission of the operator for determined functions of the welding device (4),
- in which, based on the permissions information, it is checked whether the operator is authorised to perform a welding process to be performed on the part (42) according to the part data set (46) and
- in which, depending on the result of the permissions test, the performance of the welding process on the welding device (4) is cleared or blocked.

5. Method according to claim 4,
- in which the operator data set (62) is obtained in that an operator identifier (64) assigned to the operator is received and an operator data set (62) assigned to the operator identifier (64) is retrieved.

6. Method according to any one of claims 1 to 5,
- in which the part data set (46) predefines a tolerance range to be adhered to for one or a plurality of welding parameters for a welding process to be performed on the part (42),
- in which the respective welding parameters are automatically monitored for adherence to the tolerance range during the performance of the welding process and
- in which, in the case of a deviation of a welding parameter actual value from the tolerance range, an error procedure is performed.

7. Method according to any one of claims 1 to 6,
- in which for a welding process performed on the part (42) information from the part data set (46), in particular welding parameter target values predefined for the welding process, information about the welding process carried out, in particular about welding parameter actual values recorded during the welding process, and optionally information about the operator using the welding device are linked and stored or transferred.

8. System (2) comprising a welding device (4) and a welding torch (10), **characterised in that** the system has control means which are configured to perform the method according to any one of claims 1 to 7.

9. System according to claim 8, **characterised in that** the welding device (4) has a controller (8), which is configured to perform the method according to any one of claims 1 to 7.

10. System according to claim 8 or 9, further comprising a server (30) connectable or connected to the welding device (4) via a communication connection (32), wherein the server (30) comprises a memory (70) with part data sets (46) and optionally with operator data sets (62) and wherein the server (30) is configured to transmit a selected part data set (46) and optionally a selected operator data set (62) to the welding device (4).

11. System according to any one of claims 8 to 10, further comprising a data carrier (130) assigned to a part (42), the data carrier comprising machine-readable data with a part data set (46) assigned to the part (42) or a part identifier (44) assigned to the part (42).

12. System according to any one of claims 8 to 11, further comprising data goggles or a welding helmet with integrated display, wherein the data goggles or the welding helmet is connectable to the welding device (4) via a communication connection and the welding device (4), in particular its controller (8), is configured to output a user output via the data goggles or the welding helmet.

13. Computer program comprising program instructions,
**characterised in that**
the program instructions cause at least one processor to carry out the method according to any one of claims 1 to 7, when the computer program runs on the at least one processor.

## Revendications

1. Procédé de commande d'un appareil de soudage, exécuté sur au moins un appareil, dont au moins un appareil de soudage (4) avec une torche de soudage (10) raccordée à l'appareil de soudage (4),
- dans lequel un ensemble de données composant (46) associé à un composant déterminé (42) est obtenu, lequel ensemble de données spécifie des valeurs de consigne de paramètre de soudage pour une opération de soudage à exécuter sur le composant (42), et
- dans lequel l'appareil de soudage (4) est ajusté automatiquement, conformément aux valeurs de consigne de paramètre de soudage spécifiées pour l'opération de soudage,
- dans lequel l'ensemble de données composant (46) spécifie un plan d'opérations de soudage (50) pour le composant (42), le plan d'opérations de soudage (50) spécifiant un ordre pour plusieurs opérations de soudage successives à effectuer sur le composant (42), ainsi que des valeurs de consigne de paramètre de soudage pour les opérations de soudage individuelles, et
- dans lequel l'appareil de soudage (4) est ajusté automatiquement, successivement dans l'ordre prédéterminé, conformément aux valeurs de consignes de paramètre de soudage spécifiées pour les opérations de soudage individuelles,
**caractérisé**
- **en ce que** l'appareil de soudage (4) est ajusté à une entrée utilisateur prédéfinie, respectivement conformément aux valeurs de consigne de paramètre de soudage spécifiées pour la prochaine opération de soudage selon l'ordre prédéterminé, où, en ce qui concerne l'entrée utilisateur prédéfinie, il s'agit d'une entrée utilisateur au niveau de la torche de soudage (10), de sorte qu'un utilisateur puisse exécuter successivement le plan d'opérations de soudage (50) sans devoir pour cela lâcher la torche de soudage (10) prise en main.

2. Procédé selon la revendication 1,
- dans lequel l'ensemble de données composant (46) associé au composant spécifique (42) est obtenu en recevant un identifiant composant (44) associé au composant spécifique (42) et en récupérant l'ensemble de données composant (46) associé à l'identifiant composant (44).

3. Procédé selon la revendication 1 ou 2,
- dans lequel une sortie utilisateur (80) est émise, laquelle contient une information sur la prochaine opération de soudage conformément à l'ordre prédéterminé.

4. Procédé selon l'une des revendications 1 à 3,
- dans lequel un ensemble de données utilisateur (62) associé à un utilisateur de l'appareil de soudage (4) est obtenu, lequel ensemble de données contient des informations d'autorisation quant à l'autorisation de l'utilisateur pour certaines fonctions de l'appareil de soudage (4),
- dans lequel est vérifié, en fonction des informations d'autorisation, si l'utilisateur est autorisé à exécuter une opération de soudage à exécuter sur le composant (42) conformément à l'ensemble de données composant (46), et
- dans lequel, en fonction du résultat de la vérification des autorisations, l'exécution de l'opération de soudage sur l'appareil de soudage (4) est autorisée ou bloquée.

5. Procédé selon la revendication 4,
- dans lequel l'ensemble de données utilisateur (62) est obtenu en recevant un identifiant utilisateur (64) associé à un utilisateur et en récupérant l'ensemble de données utilisateur (62) associé à l'identifiant utilisateur (64).

6. Procédé selon l'une des revendications 1 à 5,
- dans lequel l'ensemble de données composant (46) pour une opération de soudage à effectuer sur le composant (42) spécifie une plage de tolérance à respecter pour un ou plusieurs paramètres de soudage,
- dans lequel, pendant l'exécution de l'opération de soudage, les paramètres de soudage concernés sont automatiquement surveillés quant au respect de la plage de tolérance et
- dans lequel, lors d'un écart d'une valeur réelle de paramètre de soudage par rapport à la plage de tolérance, une procédure d'erreur est exécutée.

7. Procédé selon l'une des revendications 1 à 6,
- dans lequel, pour une opération de soudage effectuée sur le composant (42), des informations en provenance de l'ensemble de données composant (46), en particulier des valeurs de consigne de paramètre de soudage prédéterminées pour l'opération de soudage, des informations sur l'opération de soudage effectuée, en particulier sur les valeurs réelles de paramètre de soudage enregistrées pendant l'opération de soudage, et, de manière facultative, des informations sur l'utilisateur utilisant l'appareil de soudage sont mutuellement reliées et sauvegardées ou transmises.

8. Système (2) comportant un appareil de soudage (4) et une torche de soudage (10),
**caractérisé**
**en ce que** le système présente des moyens de commande qui sont configurés pour exécuter le procédé selon l'une des revendications 1 à 7.

9. Système selon la revendication 8,
**caractérisé en ce que** l'appareil de soudage (4) présente un dispositif de commande (8) qui est configuré pour exécuter le procédé selon l'une des revendications 1 à 7.

10. Système selon la revendication 8 ou 9, comportant en outre un serveur (30) relié ou susceptible d'être relié à l'appareil de soudage (4) par une liaison de communication (32), où le serveur (30) comporte une mémoire (70) avec des ensembles de données composant (46) et, de manière facultative, avec des ensembles de données utilisateur (62) et où le serveur (30) est configuré de sorte à transmettre un ensemble de données composant (46) sélectionné et, de manière facultative, un ensemble de données utilisateur (62) sélectionné, à l'appareil de soudage (4).

11. Système selon l'une des revendications 8 à 10, comportant en outre un support de données (130) associé au composant (42), présentant des données lisibles par machine avec un ensemble de données composant (46) associé au composant (42) ou un identifiant composant (44) associé au composant (42).

12. Système selon l'une des revendications 8 à 11, comportant en outre une paire de lunettes de données ou un casque de soudage avec affichage intégré, où la paire de lunettes de données ou bien le casque de soudage est susceptible d'être relié(e) par une liaison de communication à l'appareil de soudage (4), et où l'appareil de soudage (4), en particulier son dispositif de commande (8), est configuré pour émettre une sortie utilisateur par l'intermédiaire de la paire de lunettes de données ou bien par l'intermédiaire du casque de soudage.

13. Programme informatique comportant des instructions de programme,
**caractérisé**
**en ce que** les instructions de programme provoquent l'exécution du procédé conformément à l'une des revendications 1 à 7 par au moins un processeur, lorsque le programme informatique est en cours sur l'au moins un processeur.
